# EUROPEAN PATENT APPLICATION

(11) **EP 2 534 955 A1**
(43) Date of publication of application: **19.12.2012**
(21) Application number: 11739632.5
(22) Date of filing: 21.01.2011
(51) Int. Cl.: A23F 5/46, A23F 5/26

(54) **COFFEE AROMA-CONTAINING COMPOSITION**

(30) Priority: 08.02.2010 JP 2010025980
(71) Applicant: Suntory Holdings Limited, Osaka-shi, Osaka 530-8203 (JP)
(72) Inventor: FUJIWARA, Masaru, Kawasaki-shi Kanagawa 211-0067 (JP); HINO, Yoshiko, Kawasaki-shi Kanagawa 211-0067 (JP); MIZUTA, Mami, Mishima-gun Osaka 618-8503 (JP); ONISHI, Tatsuji, Kawasaki-shi Kanagawa 211-0067 (JP)
(74) Representative: Vossius & Partner
(86) International application number: PCT/JP2011/051074
(87) International publication number: WO 2011/096283

(57) **Abstract**

The object of the present invention is to provide a coffee aroma-containing composition which can achieve such aromatic and good flavor as one obtained immediately after extraction in industrially produced coffee extracts and coffee beverages.

The coffee aroma-containing composition is obtained by addition of a liquid to ethyl isovalerate-containing roasted coffee beans, wet-grinding of them to prepare slurry, and stripping of aroma components from the slurry.

## Description

### TECHNICAL FIELD

The present invention relates to a coffee aroma-containing composition which can enhance the coffee flavor of industrially produced coffee extracts and coffee beverages and suppress their undesirable flavor (off-flavor).

### BACKGROUND ART

An industrially produced coffee beverage with which a container such as a can or a PET bottle is filled is generally produced by dilution of a coffee extract obtained from hot water extraction of coffee beans to a concentration of a beverage, filling of a container with the diluted extract, and sterilization thereof. However, the problems concerning the coffee extract are, for example, that the aroma components contained in coffee beans are not fully extracted, that the contact time between coffee beans and hot water is so long as to cause coffee to lose its valuable aroma, and that coffee loses the valuable aroma during heat sterilization for storage, causing the flavor to change greatly. An industrially produced coffee extract and coffee beverage produced using the extract are considerably different in aroma and flavor from regular coffee brewed at home and elsewhere. In addition, to supply the obtained coffee extract in the form of a coffee beverage, the coffee extract generally has to be diluted to a concentration of a beverage before sterilization treatment, and the dilution weakens the aroma components and changes the balance of flavor. Use of lots of coffee beans can enhance the aroma, but at the same time, the use increases the taste components, enhancing the bitter flavor and the negative flavor of deteriorated components and the like. The resulting aroma and flavor are not necessarily satisfactory.

Under these circumstances, various methods for recovering aroma components (aroma) from roasted coffee beans and using the aroma for coffee extracts and coffee beverages have been suggested. For example, Patent Document 1 discloses a coffee beverage obtained by recovering aroma components from a coffee extract, heat-sterilizing the extract remaining after the recovery of the aroma components, subjecting the recovered aroma components to sterilization by membrane filtration, and subsequently blending the extract and the aroma components under a sterile environment, thereby retaining the balance of the aroma components of fresh coffee and suppressing the loss of sulfur-containing compounds which contribute to the flavor of roasted coffee beans. Patent Document 2 discloses a coffee extract which has fine aroma and flavor as well as fine taste even after sterilization, and discloses that the coffee extract is produced through the steps of (i) immersing ground roasted coffee beans in hot water containing an antioxidant or wetting the same coffee beans with such hot water, (ii) extracting the coffee beans obtained in the step (i) with water vapor and recovering a distillate, (iii) extracting the distillation residue obtained in the step (ii) with hot water which contains an antioxidant and recovering an extract, and (iv) blending the distillate obtained in the step (ii) and the extract obtained in the step (iii). Patent Document 3 discloses a concentrated coffee extract which is rich in aroma components released when roasted coffee beans are ground, characterized by a process including separating an aroma component-containing condensate, a coffee oil-containing liquid, and a coffee extract, from slurry obtained by wet-grinding of roasted coffee beans, and adding back the aroma component-containing condensate and the coffee oil-containing liquid after the coffee extract is concentrated. Patent Document 4 discloses a multistage extraction process for coffee extracts which includes (i) stripping a raw material of coffee with saturated water vapor while pressure and temperature are raised, and cooling the vapor to 2-5°C to obtain an aroma concentrate, (ii) extracting the distillation residue obtained in the step (i) at a temperature of 60-120°C and a pressure of 20-40 bar to obtain an aroma concentrated liquid, (iii) stripping the aroma concentrated liquid in the step (ii) with saturated water vapor to obtain an aroma concentrated liquid, and (iv) extracting the extraction residue obtained in the step (ii) at a high temperature of 160-220°C and blending the extracts obtained in the above steps.

### CITATION LIST

### PATENT DOCUMENT

Patent Document 1: Japanese Patent Public Disclosure No. 2007-20441
Patent Document 2: Japanese Patent Public Disclosure No. 2007-117080
Patent Document 3: WO2006-28193
Patent Document 4: DE19826143

### SUMMARY OF INVENTION

### TECHNICAL PROBLEM

The aroma and flavor of coffee are very delicate and unstable, and those obtained immediately after extraction change with time and cannot be retained for a long time. The object of the present invention is to provide a coffee aroma-containing composition which can achieve such aromatic and good flavor as one obtained immediately after extraction in industrially produced coffee extracts and coffee beverages.

### SOLUTION TO PROBLEM

As a result of intensive studies to solve the above problem, the present inventors have found that the addition of a very small amount of ethyl isovalerate, which is a compound having fruity aroma, to a coffee beverage surprisingly allows for long-term retention of the coffee aroma without any change in the coffee flavor. The present inventors also have found that the action of ethyl isovalerate is also useful in packed coffee beverages which are obtained by heat treatment such as UHT sterilization or retort sterilization and which are stored at normal temperature for a long time; the coexistence of ethyl isovalerate with coffee ingredients which are easy to disappear or deteriorate under thermal influence can suppress the reduction in the flavor of packed coffee beverages before and after heating or before and after storage.

As a result of further studies based on these findings, the present inventors have found that an aroma-containing composition obtained by addition of a liquid to ethyl isovalerate-containing roasted coffee beans, wet-grinding of them to obtain slurry, and stripping of aroma components from the slurry is useful in improvement in the flavor of coffee extracts and coffee beverages, because the composition is rich in aroma containing the low-boiling components of coffee and contains ethyl isovalerate, which is useful in retention of coffee flavor. The present invention has been thus accomplished.

More specifically, the present invention relates to the following:
(1) an aroma-containing composition, which is obtained by wet-grinding of ethyl isovalerate-containing roasted coffee beans to prepare slurry and stripping of aroma components from the slurry;
(2) the aroma-containing composition according to aspect (1), wherein the ratio of ethyl isovalerate to the total amount of the composition is 100 ppb or higher; or
(3) a packed coffee beverage obtained by addition of the aroma-containing composition according to aspect (1) or (2).

### ADVANTAGEOUS EFFECTS OF INVENTION

By addition of the inventive coffee aroma-containing composition, a coffee beverage can be obtained which has the original coffee flavor enhanced and in which changes in the flavor associated with storage, heat sterilization, or the like is suppressed, even if the beverage is packed. Further, a coffee extract obtained by blending the inventive aroma-containing composition into an industrially produced coffee extract is unlikely to be affected by time and heat, and even when the obtained extract is diluted to produce a coffee beverage, the balance of its aroma and flavor is unlikely to change. These advantages allow for production of a coffee beverage as designed, namely, a packed coffee beverage which is so aromatic as a fresh regular coffee (a coffee extract immediately after extraction).

Another advantage is that the inventive coffee aroma-containing composition can be produced by a simple procedure characterized by addition of a liquid to ethyl isovalerate-containing roasted coffee beans, wet-grinding of them to obtain slurry, and stripping of aroma components from the slurry; the production requires no cumbersome procedure.

### DESCRIPTION OF EMBODIMENTS

### Aroma-containing Composition

The aroma-containing composition as referred to herein is a concentrate of the aroma components in roasted coffee beans, specifically, a condensate obtained from roasted coffee beans by a gas-liquid countercurrent contact extraction or the like, or a concentrate thereof.

The first characteristic of the inventive aroma-containing composition is use of ethyl isovalerate-containing roasted coffee beans as a raw material. Ethyl isovalerate (also noted as butanoic acid 3-methyl- ethyl ester, butyric acid 3-methyl- ethyl ester, or isovaleric acid ethyl ester) is a compound represented by the formula (I):

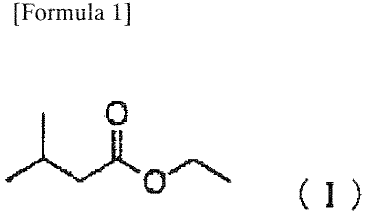

which is a compound existing in fruits such as pineapple, strawberry, and citrus fruits. The present inventors have confirmed through the studies that coffee beans which were fermented contain ethyl isovalerate. Considering that unfermented, green coffee beans and coffee beans obtained by roasting the green coffee beans, or marketed coffee beverages were not found to contain ethyl isovalerate, ethyl isovalerate is believed to be a compound generated specifically by fermentation. Coffee beans which were fermented (hereinafter referred to as "fermented coffee beans") are obtained by processing based on some sort of fermentation using microbial action on harvested coffee cherries, and the fermented coffee beans contain ethyl isovalerate at a concentration detectable by the method stated below.

### (Detection Method of Ethyl Isovalerate in Coffee Beans)

First, after grinding 5 g of green coffee beans to a medium grind, 50 mL of distilled water is added thereto and the ground coffee beans are distilled with water vapor to obtain 100 mL of distillate. The distillate is put in a separating funnel, and then 25 g of sodium chloride and 50 mL of diethyl ether are added thereto and the resulting mixture was shaken for 20 minutes. The resulting diethyl ether layer is recovered while only the aqueous layer separated therefrom is put in the separating funnel. Another 50 mL of diethyl ether is added to the separating funnel and the resulting mixture was shaken for 20 minutes. Only the thus obtained diethyl ether layer is then recovered. A total of 100 mL of the diethyl ether layer obtained is put back into the separating funnel and the funnel is rinsed with 50 mL of distilled water. Only the thus obtained diethyl ether layer is then recovered and dehydrated with 30 g of sodium sulfate added thereto. After the mixture is concentrated to 1 mL by the KD (Kuderna-Danish) concentration method, the concentrate is introduced into GC-MS to detect ethyl isovalerate. The GC-MS conditions are as follows:

### <GC-MS Conditions>

Apparatus: 6890N (GC) + 5973inert (MS); a product of Agilent
Column: MACH HP-INNOWAX (10 m x 0.20 mm x 0.20 µm); a product of GERSTEL
Column Temperature: 40°C (3 min)-50°C/min-250°C (10 min)
Carrier Gas: He
Inlet Temperature: 250°C
Transfer Line: 250°C
Ion Source Temperature: 230°C
Scan Parameter: m/z=35-350
SIM Parameter: m/z=70, 88, 102

Fermented coffee beans can be obtained, for example, by any one of the following methods:
1) a method of fermenting harvested coffee cherries through contact with a microorganism and subsequently husking (polishing) the fermented coffee cherries by wash process or non-wash process.
2) a method of drying harvested coffee cherries in the sun or with a machine, subsequently fermenting the dried coffee cherries through contact with a microorganism, and husking (polishing) the fermented coffee cherries by wash process or non-wash process.
3) a method of drying harvested coffee cherries in the sun or with a machine while they are fermented with a microorganism, and husking (polishing) the fermented coffee cherries.
4) a method of removing pulp from harvested coffee cherries put in a pulp remover, subsequently putting the parchment obtained into a water tank to remove mucilage which sticks to the parchment and adding a utilized component to perform microbial fermentation, and drying the parchment in the sun or with a machine followed by husking (polishing).

The contact with a microorganism may be made either by artificial addition of the microorganism or by use of microorganism attached to coffee cherries at their surfaces or the like. Examples of the microorganism used for the artificial contact with coffee cherries include yeasts such as yeasts for wine fermentation (e.g., yeasts of Lalvin L2323 strain (Sceti Company) and CK S102 strain (Bio Springer), both of which belong to *Saccharomyces Cerevisiae,* and the species *bayanus* of the genus *Saccharomyces*)*,* yeasts for beer fermentation, and baker's yeasts; lactic acid bacteria of the genera *Lactobacillus, Pediococcus,* and *Oenococcus*; aspergilli used to make *sake, shochu* (Japanese distilled liquor), *miso* (Japanese fermented soybean paste), and the like; microorganisms which belong to the genus *Geotrichum* (*Deuteromycetes*); and the like. Examples of microorganisms which belong to the genus *Geotrichum* include *Geotrichum candidum, Geotrichum rectangulatum, Geotrichum klebahnii,* and *Geotrichum sp.,* and *Geotrichum sp.* Sam2421 (International Deposition Number: FERM BP-10300) or its variants are particularly advantageous. These microorganisms which belong to the genus *Geotrichum* can be obtained by isolation from coffee cherries.

The contact with a microorganism can be made either by spraying or spreading the microorganism over coffee cherries or by immersing coffee cherries in a suspension containing the microorganism. The fermentation conditions may be chosen as appropriate according to selected microorganisms.

As stated above, microorganisms which belong to the genus *Geotrichum or Saccharomyces* can be found on coffee cherries, and thus, instead of artificial microbial fermentation such as contact with a microorganism, a means to control the behavior of microorganisms which belong to the genus *Geotrichum or Saccharomyces* for fermentation can be taken to produce fermented coffee beans.

The regions of coffee cherry production are largely divided into the following areas: areas where coffee cherries are harvested in dry season without concern about rain, such as Yemen and Brazil; and areas where high humidity prolongs the time to dry coffee cherries in the sun, such as Latin America, Africa, and Asia. In the first group of areas including Yemen and Brazil, fermented coffee beans can be produced artificially by the method 1), 2), or 4) stated above (preferably, the method 1) or 2)), and in the second group of areas including Latin America, Africa, and Asia, fermented coffee beans can be produced not only by such an artificial means but also by drying of harvested coffee cherries in the sun while they are fermented using microorganisms attached to the surfaces of the coffee cherries, as stated in the method 3) above. To perform "fermentation" referred to in the present invention, it is important to control the growth conditions for the above-mentioned microorganisms so as to prevent a "decomposition" state, namely, to ensure that no bad odor of sulfide, ammonia, or the like will develop. When the method 3) stated above is employed, it is important that when coffee cherries are dried in the sun (i.e., when microbial fermentation is performed), decomposition is prevented by ways such as piling up the coffee cherries in a thickness not exceeding a certain level (e.g., 10 cm or less); laying them out in a thin layer (e.g., 5 cm or less) just after the start of drying and increasing the layer thickness (e.g., 5-10 cm) gradually as their water content decreases; and turning the piles periodically (e.g., about once an hour).

The roasted coffee beans as a raw material of the inventive aroma-containing composition are obtained by roasting of the fermented coffee beans stated above. The fermented coffee beans may be roasted so that they have an L value of 16-30, preferably about 18-22. In roasting by which the coffee beans have an L value of 16 or less, the resulting cyclic dipeptide and the like may block the advantageous effect of ethyl isovalerate, which is an effective ingredient of the present invention.

The inventive aroma-containing composition can be obtained by addition of a normal-temperature liquid (preferably 40°C or less, more preferably 30°C or less) to the fermented, roasted coffee beans stated above, wet-grinding of them to prepare slurry, and stripping and recovery of aroma components from the slurry. The liquid (preferably, water) is added to the roasted coffee beans in a mixing ratio (weight ratio) of coffee beans to water of 3:97 to 30:70, preferably 5:95 to 20:80, more preferably about 8-15:92-85. It is preferred that the coffee beans are ground by wet-grinding such that the average diameter of the ground particles falls within 300 µm-2.0 mm, preferably 500 µm-1.5 mm, more preferably 600 µm-1.2 mm. The slurry is so heated that its temperature falls within a temperature range of 90-100°C, because the stripping efficiency is high within the temperature range when the slurry is subjected to stripping.

The term "stripping" as used herein means a treatment to concentrate the volatile components contained in the slurry into gas phase by counter-current contact of a heat source and the slurry to rectify the slurry. A preferred gas-liquid countercurrent contact extractor, which is a stripping device, is a continuous thin-film distillation device which is capable of supplying slurries continuously and which has high heat transfer efficiency (for example, a SCC (spinning cone column; a product of FlavourTech) extractor as disclosed in Japanese Examined Patent Publication No. H7-22646). The SCC extractor enables efficient and separate recoveries of aroma components (aroma-containing composition) and coffee extract from an identical raw material (roasted coffee beans).

From the viewpoint of efficient extraction of ethyl isovalerate contained in roasted coffee beans, when normal-pressure distillation is applied, the stripping temperature is preferably about 80-130°C, more preferably about 90-110°C, even more preferably about 98-105°C. When reduced-pressure distillation is applied, a person skilled in the art appropriately can set a temperature zone within which an advantageous effect comparable to that obtained at the above temperatures can be obtained.

The aroma components obtained by stripping are condensed to produce the inventive coffee aroma-containing composition. The component is condensed by any cooling method to cool the components to about 1-20°C, preferably about 1-15°C.

The proportion of the inventive coffee aroma-containing composition, namely, the aroma-containing condensate recovered in stripping, preferably falls within a range of about 1-10 wt. %, more preferably about 2-6 wt. %, relative to the total weight of the slurry supplied to a stripping device. The recovery amount of the aroma-containing condensate can be adjusted by the amount of heat in a heat source relative to the slurry supplied to the stripping device, the degree of vacuum in the stripping atmosphere, and the like.

The content of ethyl isovalerate in the inventive coffee aroma-containing composition obtained as described above (aroma-containing condensate) is preferably 100 ppb or greater on a weight basis, more preferably 100 ppb-20 ppm, even more preferably 200 ppb-10 ppm, particularly preferably 300 ppb-10 ppm. The concentration of ethyl isovalerate contained in the coffee aroma-containing composition can be measured by any of known methods such as gas chromatography and HPLC. Typically, gas chromatography is used as shown in the working examples described later.

The inventive coffee aroma-containing composition which contains ethyl isovalerate is unlikely to be affected by heat and to change through long-term storage. Thus, use of a mixture of the composition and any of various types of coffee extracts and coffee beverages can maintain and enhance the original coffee flavor of the coffee extracts and coffee beverages. Examples of the coffee aroma maintained include the aromas of the major components of coffee such as furfuryl alcohol, 5-methylfurfural, 2,5-dimethylpyrazine, 2,6-dimethylpyrazine, ethylpyrazine, phenol, and 2-acetylpyrrole. The mechanism of the maintenance and enhancement of the coffee flavor is unclear, but ethyl isovalerate, which is a component unlikely to be lost by heat, is considered to capture or encompass the aroma components contained in roasted coffee beans at the time of stripping, thereby making the coffee aroma unlikely to go away.

The inventive coffee aroma-containing composition not only enhances coffee flavor and maintains coffee aroma and flavor but also reduces odor and taste which are caused generally by heat treatment such as UHT sterilization or retort sterilization, specifically, unpleasant odor such as heating odor and unrefined odor and bad aftertaste such as harsh taste and astringent taste (they are referred to collectively as off-flavor). Treatments such as heating sterilization cause off-flavor in industrially produced coffee extracts and packed coffee beverages, while off-flavor caused after heating sterilization is perceptionally suppressed in coffee extracts and coffee beverages which contain the inventive coffee aroma-containing composition. Off-flavor associated with heating sterilization is markedly given out particularly in coffee extracts having a high solid concentration (approximately 2 to 30 wt. % of solid content of coffee) and black coffee which contains no dairy ingredients or sweetening ingredients (preferably, black coffee containing no flavoring); however, blending the inventive aroma-containing composition into them can suppress the off-flavor easily and effectively.

### (Coffee Extract, Coffee Beverages)

The coffee extract as referred to herein is a coffee extract which is obtained by extraction of ground roasted coffee beans with hot water or the like and which is concentrated if needed to achieve a solid content of coffee of approximately 2 to 30 wt. %.

The coffee beverages as referred to herein are beverage products using coffee content as a raw material which are produced through the step of heating sterilization. The beverage products are not particularly limited in type, but main examples of the products include "coffee", "coffee beverages", and "soft drinks containing coffee", based on the definitions in "the Fair Competition Rules concerning Labeling on Coffee Drinks" (*"Kohi Inryou tou no Hyouji ni kansuru Kouseikyousoukiyaku*")*,* which was approved in 1977. In addition, among beverages using coffee content as a raw material, such beverages containing 3.0 wt. % or higher of milk solids are covered by "the Fair Competition Rules concerning Labeling on Milk for Drinking" (*"Inyounyuu no Hyouji ni kansuru Kouseikyousoukiyaku*") and treated as "milk beverages"; they are also included in coffee beverages as referred to in the present invention, for convenience sake. The coffee content means a solution containing components derived from coffee beans, and one example of the coffee content is coffee extract, namely, a solution obtained by extraction of roasted and ground coffee beans with water, hot water, or the like. Another example of the coffee content is appropriate volumes of solutions obtained by adjustment of the following with water, hot water, or the like: coffee extracts obtained by concentration of coffee extraction liquid, instant coffee obtained by drying of coffee extraction liquid, and the like.

As described above, blending the inventive coffee aroma-containing composition into coffee extracts and coffee beverages enables their coffee flavor to be maintained and enhanced and also enables off-flavor associated with heating sterilization to be suppressed. Coffee extracts and coffee beverages produced by conventionally known methods can be used, but in terms of their flavor, it is preferred that the coffee content obtained by filtration of the slurry of roasted coffee beans after stripping, which can be obtained during or after the production of the inventive coffee aroma-containing composition, is used as a raw material of coffee extracts or coffee beverages and used in combination with the inventive coffee aroma-containing composition.

The proportion of the inventive coffee aroma-containing composition which is blended into a coffee extract or a coffee beverage may be set as appropriate according to desired flavor, but in general, the proportion is preferably about 0.005 to about 10 wt. %, preferably about 0.01 to about 5 wt. %, more preferably about 0.05 to about 2 wt. %, relative to the total quantity of the coffee extract or coffee beverage. In terms of suppressing off-flavor of a coffee extract and a coffee beverage at the time of heat sterilization, the weight percentage of ethyl isovalerate in a coffee extract or a coffee beverage is 0.1 ppb or higher, preferably 0.15 ppb or higher, more preferably 0.2 ppb or higher. In addition, the temporal change in coffee aroma can be suppressed and a highly drinkable coffee beverage which keeps fresh coffee flavor (for example, the aromas of the major components of coffee such as furfuryl alcohol, 5-methylfurfural, 2,5-dimethylpyrazine, 2,6-dimethylpyrazine, ethylpyrazine, phenol, and 2-acetylpyrrole) can be obtained by addition of the coffee aroma-containing composition or a coffee extract containing the composition so that the weight percentage of ethyl isovalerate in a coffee beverage (including a coffee beverage obtained by dilution of a coffee extract) is preferably 0.1-22.5 ppb, more preferably 0.1-20 ppb, even more preferably 0.2-10 ppb, particularly preferably 0.4-10 ppb, still more preferably 0.6-7.5 ppb.

Further, the inventive additive for coffee beverages is useful as a flavor improver for coffee beverages having pH adjusted to a neutral region of about pH5.1-7.0, preferably about pH5.5-7.0, particularly preferably about pH6.0-6.5. Regular coffee brewed at home and elsewhere, i.e., coffee bean extract, is generally slightly acidic. However, since the pH is reduced in a sterilization step, a coffee beverage using the extract has undesirable acid taste and markedly deteriorates in aroma with time. For this reason, in industrially produced coffee beverages, namely, packed beverages which are sterilized by heat and stored for a long time, the pH is adjusted by a pH adjuster so that the pH after sterilization and during storage is kept within a neutral range of about pH5.1-7.0, preferably about pH5.5-7.0, more preferably about pH5.5-6.5, particularly preferably pH6.0-6.5. However, in the phase of the pH adjustment, the problem is that the slight acid taste and flavor inherent in coffee are lost. Use of the inventive additive for coffee beverages can achieve such slight acid taste as that of regular coffee, even in coffee beverages having their pH adjusted, specifically, coffee beverages with about pH5.1-7.0, preferably about pH5.5-7.0, particularly preferably about pH6.0-6.5.

### EXAMPLES

The present invention will be described below in more detail with reference to examples, but is not limited thereto.

### Example 1 Production of Fermented Coffee Beans (1)

Fermented coffee beans were produced by the following procedure:
1) a vapor treatment step for treating coffee cherries with vapor at 90-110°C for 15-30 seconds;
2) a step for cooling the coffee cherries to 30-40°C;
3) a pH adjustment step for adding adipic acid or lactic acid in an amount of 0.05-0.5 wt. % on the basis of the weight of the coffee cherries, thereby adjusting the pH of their skins to pH3-4;
4) a microbial attachment step for attaching a microorganism for fermentation either simultaneously with or subsequent to the pH adjustment step;
5) a cultivation step for cultivating the microorganism at 30-40°C for 48-72 hours;
6) a drying step for drying the cultivated coffee cherries; and
7) a separation and polishing step for separating the coffee pulp from the coffee seeds to obtain fermented coffee beans.

More specifically, 100 kg of fresh coffee cherries prepared were subjected to the treatment of Step 1) stated above at a temperature of 100°C for a treatment time of 20 seconds, on a speed-adjustable conveyor provided with a tunnel-shaped vapor-introducing section. The coffee cherries were then cooled rapidly to 40°C with blast (Step 2)). To 50 g of dried cells of Lalvin EC1118 strain (*Saccharomyces bayanus*)*,* which is a yeast for wine fermentation, 200 g of water was added to prepare a yeast solution. The yeast solution and 100 g of adipic acid were then added simultaneously to 100 kg of the coffee cherries so that the yeast would be attached evenly to the coffee cherries in an amount of 1.0 x 10⁶⁻⁷ cells per coffee cherry (Steps 3) and 4)). After the coffee cherries were allowed to stand still at 35°C for 72 hours for fermentation (Step 5)), they were dried with a drying machine (step 6)) and stripped of the pulp with a husker to obtain fermented coffee beans (green coffee beans) (Step 7)). The beans were roasted (L value: about 20) to obtain fermented, roasted coffee beans (Sample 1).

The same procedure as carried out for Sample 1 was repeated to obtain fermented, roasted coffee beans (Sample 2), except for the following: 1000 g of fresh coffee cherries were used; the vapor treatment in Step 1) was performed at 100°C for 15 seconds; the microorganism used in Step 3) was a lactic acid bacterium for yogurt production (*Lactobaccillus Acidophilus*); the amount of the lactic acid bacteria attached to the coffee cherries was 2.0 x 10⁷⁻⁸ cells per coffee cherry; and adipic acid was not used.

The same procedure as described above was repeated to obtain fermented, roasted coffee beans (Sample 3), except that lactic acid bacterium for yogurt production was replaced by a fungous for *shochu* production (*Aspergillus kawachii*) and that the amount of the fungi attached to the coffee cherries was 1.0 x 10³⁻⁴ cells per coffee cherry.

Into sample tubes for gas chromatography (GC), 10 g each of the obtained fermented, roasted coffee beans was put in unchanged form, without a grinding process, and the components contained in the headspace gas were analyzed. As a result, Samples 1, 2, and 3 were confirmed to contain ethyl acetate in amounts of 65 ppm, 63 ppm, and 68 ppm, respectively, and the samples were also all confirmed to contain ethyl isovalerate. The conditions for the GC analysis were as follows:

### (GC Analysis Conditions)

Apparatuses: Agilent 7694 HeadspaceSampler (a product of Agilent Technologies)
   Agilent 6890 GC System (a product of Agilent Technologies)
Column: HP-INNOWAX (60 mm x 0.25 mm i.d. x 0.25 µm film pressure)
Temperature: retained at 40°C for 4 min, raised at 3°C/min up to 220°C, and retained at 230°C for 30 min
Detectors: MSD, FID

### Example 2 Production of Fermented Coffee Beans (2)

In Guatemala, coffee cherries are generally polished by wash process to obtain green coffee beans. More specifically, the following procedure is employed: harvested coffee cherries are put in a water tank and stripped of impurities; the coffee cherries are then stripped of the pulp in a pulp remover; the parchment obtained are put in the water tank again to remove the mucilage sticking to the parchment; and the parchment is then dried in the sun or with a machine followed by husking. This procedure is necessarily employed since the plantations are on mountain slopes where there are no places for spreading out and drying harvested coffee cherries.

In contrast, in Brazil and other regions which have vast flat areas where a great amount of coffee cherries can be dried at a time and in which coffee cherries are harvested in dry season without concern about rain, non-wash process (also referred to as "natural" process) is applied to polishing. More specifically, it is a process in which harvested coffee cherries are spread out in patios as they are and dried in the sun, and then the coffee cherries the dried pulp of which remains are husked. The process is characterized in that complex flavor and body are given to green coffee beans during the long-time drying process.

The green coffee beans used in Example 2, however, were obtained by non-wash process in Guatemala. More specifically, the harvested coffee cherries were piled up in a thickness not exceeding a certain level (5 cm or less) with the thickness being gradually increased (5-10 cm) as the water content of the coffee cherries decreased. The piles were turned once an hour, thereby drying the coffee cherries to a water content of 10% or less over 2 weeks. The dried coffee cherries were husked to obtain the green coffee beans (Sample 4). The same analysis as in Example 1 was performed for the obtained green coffee beans and they were confirmed to contain ethyl isovalerate and ethyl acetate.

### Example 3 Reparation of Aroma-containing Composition

Fifty grams each of the fermented, roasted coffee beans produced in Example 1 (Sample 1) and in Example 2 (Sample 4) was ground together with 450 kg of normal-temperature water by use of a wet grinder. The average diameter of the particles obtained by the grinding was about 800 µm. The slurries obtained were each supplied to an SCC extractor (a product of FlavourTech; M1,000 type) at a rate of 500 L/hr, and water vapor was supplied from the bottom of the SCC extractor at a temperature of 101 °C under ambient pressure conditions, so that the ratio of each of recovered aroma-containing condensates to the supplied slurry was about 5%. The obtained condensates were cooled to 5°C to obtain aroma-containing condensates (aroma-containing compositions) (the present inventions 1 and 2). Both of their Brix values were 0.19 and the levels of ethyl isovalerate contained in the compositions of the present inventions 1 and 2 were 2.3 ppm and 380 ppb, respectively. The levels of ethyl isovalerate were measured by addition of 5 drops each of silicone to 50 mL each of the aroma-containing condensates (aroma-containing compositions), heating the thus obtained samples to 60°C, blowing nitrogen into them, adsorbing them on adsorption tubes (Tenax GR 35/60) for 20 minutes, and then heating to introduce them into GC-MS. The conditions for HS, thermal desorption, and GC-MS were as follows:

### <HS Conditions *headspace (purge and trap method)>

Adsorbent: Tenax-GR 35/60
Volume of Purge Gas Flow: 100 mL/min
Purge Time: 20 min
Volume of Sample: 50 mL
Amount of Silicone Added: 5 drops of a solution of an antifoam silicone diluted 25-fold in distilled water

### <Thermal Desorption Conditions>

Apparatus: Thermo Desorption System (TDS); a product of GERSTEL

### <GC-MS Conditions>

Apparatus: 6890N (GC) + 5973inert (MS); a product of Agilent
Column: MACH HP-INNOWAX (10 m x 0.20 mm x 0.20 µm); a product of GERSTEL
Column Temperature: 40°C (3 min)-50°C/min-250°C (10 min)
Carrier Gas: He
Transfer Line: 250°C
Ion Source Temperature: 230°C
Scan Parameter: m/z=35-350
SIM Parameter: m/z=70, 88, 102

### Example 4 Storage Test on Packed Coffee Beverages

Medium-roast Brazilian coffee beans were used as a base of an intended coffee beverage. The coffee beans were ground with a grinder (a product of Nippon Granulator Co., Ltd.), and a drip method using hot water of 94°C was used to obtain an extract having a Brix value of 2.8. Before use of the coffee extract, it was filtrated through a 500-mesh filter to remove insoluble solid contents. To the coffee extract as a base, 1.2 g of the coffee aroma-containing composition produced in Example 3 (the present invention 2) was added to make a total volume of 1 L, which was filled in 190 g inner capacity cans. Retort sterilization was performed (120-125°C; about 25 min) to obtain packed coffee beverages. The level of ethyl isovalerate contained in the coffee beverage, which was measured by the method stated in Example 3, was about 0.5 ppb. As a control, packed coffee beverages containing no coffee aroma-containing composition were also produced.

Three expert panelists evaluated the desirability of the flavor of the coffee beverages on the basis of the presence or absence of the coffee aroma-containing composition. All the panelists remarked that the coffee beverage containing the coffee aroma-containing composition was more desirable in terms of all of the strength of coffee aroma, the body of coffee, and the aftertaste. Concerning heating odor, all the panelists remarked that the odor had been advantageously reduced in the coffee beverage containing the coffee aroma-containing composition compared with the coffee beverage containing no coffee aroma-containing composition.

## Claims

1. An aroma-containing composition, which is obtained by wet-grinding of ethyl isovalerate-containing roasted coffee beans to prepare slurry and stripping of aroma components from the slurry.

2. The aroma-containing composition according to Claim 1, wherein the ratio of ethyl isovalerate to the total amount of the composition is 100 ppb or higher.

3. A packed coffee beverage obtained by addition of the aroma-containing composition according to Claim 1 or 2.
